# EUROPEAN PATENT SPECIFICATION

(11) **EP 3 945 442 B1**
(45) Date of publication and mention of the grant of the patent: **12.07.2023**
(21) Application number: 20382690.4
(22) Date of filing: 30.07.2020
(51) Int. Cl.: G06F 21/60, H04L 9/40, G06F 21/64, G06F 21/44, G06F 21/72, H04L 9/08, H04L 9/32

(54) **SECURITY METHOD AND DEVICE FOR ELECTRONIC TRANSACTIONS**
SICHERHEITSVERFAHREN UND -VORRICHTUNG FÜR ELEKTRONISCHE TRANSAKTIONEN
PROCÉDÉ ET DISPOSITIF DE SÉCURITÉ POUR DES TRANSACTIONS ÉLECTRONIQUES

(43) Date of publication of application: 02.02.2022
(73) Proprietor: NTT DATA SPAIN, S.L., 28500 Madrid (ES)
(72) Inventor: RAMÓN TARANCÓN, Sergio, 28045 MADRID (ES)
(74) Representative: Ungria López, Javier

(56) References cited:
- EP-A1- 1 879 321
- US-A1- 2016 182 486
- US-B1- 7 229 009

## Description

### TECHNICAL FIELD AND OBJECT OF THE INVENTION

The following invention generally relates to the technical field of security in electronic communications and, more specifically, to the security methods and devices that complement insecure electronic devices, having the object of ensuring the confidentiality, integrity and authenticity of the electronic transactions thereof by performing cryptographic operations on their behalf.

### BACKGROUND OF THE INVENTION

Nowadays, people need to buy goods and services on a regular basis. The buying and selling of goods and services have always been susceptible to different forms of fraud and theft. In electronic transactions, the main risks either correspond to attacks involving identity theft, wherein a malicious agent obtains the good or service by charging the amount to the impersonated user, or to attacks on the integrity of the transaction, wherein a malicious agent manipulates the data of the transaction (typically the amount) in order to receive the good or service at a lower cost or even a cost of zero, harming the party offering the good or service.

During the last few years, the volume of electronic transactions has increased very significantly, thanks largely to the intervention of hardware devices which are simple and cheap (simple loT devices and legacy devices with an indirect connection to the Internet) which provide relevant data for these transactions (e.g. electricity consumption during a recharge). However, the use of data from devices that, due to simplicity or due to age (e.g. a legacy electric vehicle charger), lack cryptographic modules, in electronic transactions (e.g. recharging an electric car) carries a high risk of attacks involving identity theft and transaction integrity.

In order to minimize the aforementioned risks, ensuring the confidentiality, integrity, authenticity and/or non-repudiation of the transactions, the insecure devices that participate in electronic transactions must be connected with cryptographic modules which perform cryptographic operations on their behalf, as in EP1879321A1 disclosing an electronic signature with a trusted platform. There are four main types of cryptographic modules, but for different reasons they do not fit very well in the scenario described.
(1) Trusted Platform Modules (TPM) need to be integrated with the devices they protect in the manufacturing process, which prevents them from providing existing insecure devices with security.
(2) Hardware Security Modules (HSM) can perform all the cryptographic operations necessary to protect electronic transactions. However, they do not have an authentication mechanism that is secure at the same time, in order to effectively prevent an attack involving stealing the identity of the device, also being light in order for it to be implemented in simple devices, and unattended so as not to require intervention from an operator.
(3) Crypto smartcards enable a user to be authenticated or perform a digital signature for third parties, after authenticating them locally (e.g. by requesting a Personal Identification Number, or PIN). Therefore, these cryptographic modules provide the legitimate owners thereof, not the insecure devices, with security. Furthermore, the cryptographic capabilities of crypto smartcards are less than those required, since they lack a secure, lightweight, and unattended authentication mechanism, as well as several relevant cryptographic operations (e.g., symmetric key generation, asymmetric key generation, token generation, cryptogram generation, digital certificate generation, random number generation, session key negotiation, token verification, cryptogram decryption).
(4) Security keys authenticate users for online services by means of tokens instead of passwords, it sometimes being necessary to authenticate the user locally in advance (e.g. by means of biometric fingerprint). Therefore, these cryptographic modules provide the legitimate users thereof, not the insecure devices, with security. Furthermore, the cryptographic capabilities of security keys are less than those required as they lack a secure, lightweight, and unattended authentication mechanism, as well as several relevant cryptographic operations (e.g. symmetric key generation, asymmetric key generation, cryptogram generation, digital signature generation, digital certificate generation, negotiation of session keys, cryptogram decryption, digital signature verification).

Therefore, the state of the art lacks a satisfactory solution for increasing the security of insecure devices, in order to perform electronic transactions ensuring the confidentiality, integrity, authenticity and/or non-repudiation thereof.

### DESCRIPTION OF THE INVENTION

The present invention solves the aforementioned problems, and to do so, a first aspect refers to an electronic security device comprising:
- a hardware cryptographic element (HCE) configured to store a public asymmetric key (PbK_HCE) and a private asymmetric key (PrK_HCE), wherein the access to the private asymmetric key PrK_HCE is restricted to the hardware cryptographic element HCE, and which is configured to perform the following cryptographic operations: symmetric key generation, asymmetric key generation, token generation, cryptogram generation, digital signature generation, random number generation, execution of cryptographic functions, negotiation of session keys, digital signature verification, token verification, cryptogram decryption, identity verification;
- a processor;
- a memory configured to store instructions for the execution thereof in the processor;
- a hardware interface configured to connect to the processor, memory and the hardware cryptographic element HCE; and
- a communication interface configured to establish a communication with an insecure electronic device, comprising a second processor, a second memory which stores instructions for the execution thereof in the second processor and a second hardware interface connecting the second processor and the second memory, and wherein the insecure electronic device does not have hardware cryptographic elements; wherein the electronic security device is configured to:
   obtain, through the hardware cryptographic element HCE, a digital HCE certificate which guarantees the authenticity of the hardware cryptographic element;
   generate, through the hardware cryptographic element HCE, a pair of asymmetric end keys (or endorsement keys) which are stored in the hardware cryptographic element HCE itself;
   generate, through the hardware cryptographic element HCE, a pair of asymmetric ID keys;
   obtain, through external services providers which enable electronic transactions and are located outside of the electronic device, digital root certificates (root certs), in response to providing the digital ID certificate thereof and demonstrating that it possesses the asymmetric ID keys;
wherein the processor is configured to execute instructions stored in the memory in order to:
obtain a digital end certificate, through an external endorsement credentials provider located outside of the device, in response to providing a digital end certificate request generated from the asymmetric end keys, in order to provide the digital HCE certificate and to providing a demonstration of possession of the private asymmetric key of the hardware cryptographic element (PrK_HCE);
obtain, through a terminal connected to it, information describing the insecure electronic device (device info, DI) requesting pairing with the security device;
obtain a digital ID certificate, through an external identity credentials provider located outside of the electronic device, in response to providing a digital ID certificate request generated from the asymmetric ID keys and the insecure device info (DI), to providing the digital end certificate and to providing a demonstration of possession of the asymmetric end keys;
receive requests from the insecure device in order to perform cryptographic operations with the aim of securing electronic transactions, wherein these operations may require the use of asymmetric ID keys and/or digital root certificates (root certs) and wherein these requests can include several parameters; and
send to the insecure device the result of each requested cryptographic operation or an error code.

Additionally, the security device of the present invention envisages generating, through the hardware cryptographic element (HCE), a first symmetric session key #1 (SSK1); wherein the processor executes instructions stored in the memory in order to send the first symmetric session key #1 (SSK1) to the insecure device after verifying the identity thereof; and wherein the processor executes instructions stored in the memory in order to verify that the insecure device knows the value of the first symmetric session key SSK1 stored in the security device, through a process including the generation of a random number RND and the use of a first cryptographic unidirectional function #1 (CUF1 ()), and wherein the security device and the insecure device intervene.

In one of the embodiments of the invention, the electronic security device is further configured to generate, through the hardware cryptographic element (HCE), a second symmetric session key #2 (SSK2); and wherein the processor executes instructions stored in the memory in order to send the second symmetric session key #2 (SSK2) to the insecure device after verifying the identity thereof.

In one of the embodiments of the invention it is envisaged that the pair of asymmetric keys PbK_HCE, PrK_HCE is RSA.

In one of the embodiments of the invention it is envisaged that the pair of asymmetric keys PbK_HCE, PrK_HCE is ECC.

In one of the embodiments of the invention it is envisaged that the communication interface with the insecure device is I2C.

In one of the embodiments of the invention it is envisaged that the communication interface with the insecure device is SPI.

In one of the embodiments of the invention it is envisaged that the communication interface with the insecure device is USB.

In one of the embodiments of the invention it is envisaged that the communication interface with the insecure device implements a UART protocol.

In one of the embodiments of the invention it is envisaged that the communication interface with the insecure device is Bluetooth.

In one of the embodiments of the invention it is envisaged that the communication interface with the insecure device is NFC.

A second aspect of the invention relates to a method to be executed in an electronic security device, wherein the method comprises the following steps:
- initializing the security device, including initializing the hardware cryptographic element (HCE) obtaining a pair of asymmetric keys, a public asymmetric key (PbK_HCE) which will be exposed outside of the hardware cryptographic element HCE and a private asymmetric key (PrK_HCE) which will not be exposed outside of the hardware cryptographic element HCE, wherein the access to the private asymmetric key PrK_HCE is restricted to the hardware cryptographic element HCE, and also obtaining a digital HCE certificate which guarantees the authenticity thereof, wherein the security device produces a pair of asymmetric end keys through the hardware cryptographic element HCE, and wherein the security device obtains a digital end certificate, through an external endorsement credentials provider, after providing an end certificate request generated from the asymmetric end keys and after providing the HCE certificate and a demonstration of the possession of the private asymmetric key of the hardware cryptographic element (PrK_HCE);
- pairing/repairing the security device with an insecure device, which does not integrate cryptographic modules, wherein this pairing implies that the security device obtains, through a terminal connected to it, device info (DI),
   - wherein if the security device has not previously obtained a digital ID certificate, it produces a pair of asymmetric ID keys through the HCE and obtains a digital ID certificate, through an external identity credentials provider, after providing a digital ID certificate request generated from the asymmetric ID keys and insecure device info (DI), and after providing the digital end certificate and a demonstration of the possession of the asymmetric end keys, wherein the security device generates a first symmetric session key #1 (SSK1) and sends the first symmetric session key (SSK1) to the insecure device, and wherein the security device obtains, using the digital ID certificate thereof and a demonstration that it possesses the asymmetric ID keys, digital root certificates (root certs) which enable secure communications to be negotiated and established in order to perform electronic transactions, through the external services providers which enable electronic transactions,
   - wherein if the security device has previously obtained a digital ID certificate, it verifies if the insecure device info (DI) is contained in the digital ID certificate, if so, the security device generates a new first symmetric session key #1 (SSK1) and sends the symmetric session key (SSK1) to the insecure device, and if not, an error message is displayed in the terminal connected to the security device and it returns to the beginning of the process of repairing the security device with the insecure device;
- authenticating the insecure device by the security device, wherein both devices communicate using a communication interface present in both of them, wherein the security device generates, through the HCE, a random number RND, which is used to pose a cryptographic challenge to the insecure device, wherein the security device sends the random number RND to the insecure device, wherein the security device and the insecure device calculate the result of applying the same first cryptographic unidirectional function #1 (CUF1 ()) to a combination of data including at least the first symmetric session key SSK1 and the random number RND, the security device obtaining a first result (challenge_sdisp) and the insecure device obtaining a second result (challenge_idisp), wherein the insecure device sends the second result (challenge_idisp) to the security device, wherein the security device verifies if the second result received (challenge_idisp) matches the first result (challenge_sdisp), wherein if both results do not match (challenge_sdisp and challenge_idisp), the authentication process of the insecure device by the security device will be repeated until challenge_sdisp and challenge_idisp match or a number of retries are reached (n_retries), wherein if the number of retries is reached (n_retries), it returns to the beginning of the process of repairing the security device with the insecure device; and
- executing cryptographic operations in the security device, wherein the insecure device requests, by means of messages sent to the security device, that it perform the cryptographic operations in order to secure electronic transactions, wherein these operations may require the use of asymmetric ID keys and/or digital root certificates (root certs), wherein the insecure device can include additional parameters in the request messages, and wherein the security device sends the result of each requested operation or an error code to the insecure device.

According to one of the embodiments of the invention, in the step of executing the cryptographic operations in the security device, all the request and response messages exchanged by the insecure device and the security device are accompanied by a verification code obtained by means of the application of a second cryptographic unidirectional function #2 (CUF2 ()) to a combination of data which includes at least the value of the first symmetric session key (SSK1) and the message to be sent.

According to one of the embodiments of the invention, the step of pairing the security device with the insecure device comprises generating, by the security device, a second symmetric session key #2 (SSK2) and sending it to the insecure device, wherein in the process of executing the cryptographic operations in the security device, all the messages exchanged by the security device and the insecure device are encrypted before being sent and decrypted after being received, using the second symmetric session key (SSK2) to do so.

According to one of the embodiments of the invention, the step of executing cryptographic operations in the security device comprises that after exceeding a time Timeout_Op since the last cryptographic operation request received by the security device originating from the insecure device, the next cryptographic operation request received by the security device originating from the insecure device leads to returning to the authentication process of the insecure device by the security device, after which the security device and the insecure device update the value of the first symmetric session key #1 (SSK1) using a third unidirectional cryptographic function #3 (CUF3 ()) to obtain it which is applied to at least the previous value of SSK1, after which the security device and the insecure device update the value of the second symmetric session key #2 (SSK2) if there was one, using a fourth unidirectional cryptographic function #4 (CUF4 ()) to obtain it which is applied to at least the previous value of SSK2, after which both devices return to the process of executing cryptographic operations in the security device.

According to one of the embodiments of the invention, the step of pairing the security device with the insecure device comprises obtaining by the security device, using the digital ID certificate and a demonstration that it possesses the asymmetric ID keys, a digital remote administration certificate (admin cert) which enables the security device to establish secure communications with a remote administrator of the security device, and wherein authenticating the insecure device by the security device, after reaching the number of retries n_retries, comprises connecting, by the security device, to a remote administrator using at least the digital administrator certificate (admin cert) and the asymmetric ID keys, wherein if the security device receives an authorization message from the remote administrator, the security device sends the first symmetric session key (SSK1), and the second symmetric session key (SSK2) if there was one, to the insecure device, and continues with the authentication process of the insecure device by the security device.

In order to complement the description being made and with the object of helping to better understand the features of the invention, the present specification is accompanied by a set of figures that, by way of illustration and not limitation, represent the most characteristic details of the invention. The invention is defined in the appended claims.

### BRIEF DESCRIPTION OF THE FIGURES

**Figure 1** shows an objective operation scenario of the present invention.
**Figure 2** It shows a flow chart comprising the different stages of the proposed method, in the basic form thereof and with additional possibilities.
**Figure 3** represents, as an extension of Figure 1, all the actors appearing in each of the phases of the method and the mutual interactions thereof.
**Figure 4** represents in detail the constituent elements managed by the actor participating in all the scenarios of the method: the security device.
**Figure 5** describes all the stages of the method implemented by the security device, with details of the main steps executed in each phase.

### DESCRIPTION OF A PREFERRED EMBODIMENT

The present invention defines an electronic security device and a method which enables an insecure electronic device to be provided with suitable security levels, so that it can carry out reliable electronic transactions.

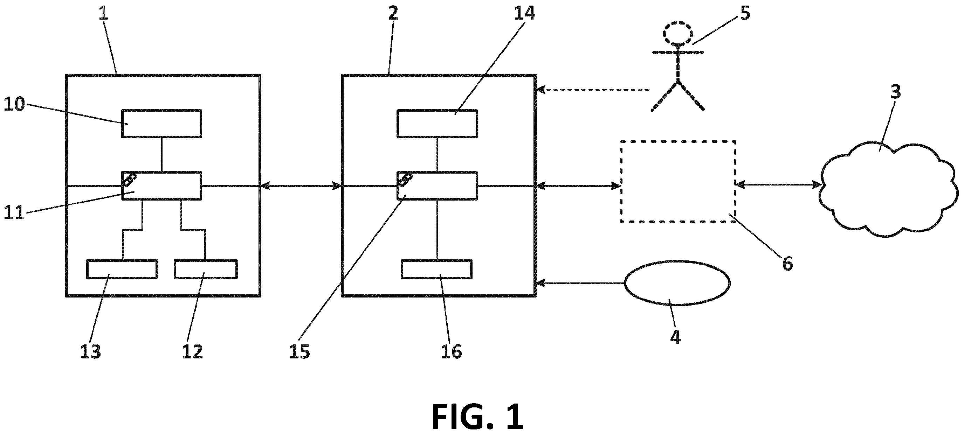

In the objective operation scenario of the invention, represented in **Figure 1**, three indispensable actors intervene (represented in Figure 1 in a continuous line): the aforementioned security device **1**, the aforementioned insecure device **2** and an external digital services provider **3.** The security device **1**, which comprises a microprocessor **10**, communication interfaces **11**, a memory **12** and a hardware cryptographic element **13** (HCE), enables the insecure device **2**, which also comprises a microprocessor **14**, communication interfaces **15** and a memory **16,** but it does not have a hardware cryptographic element (HCE), performing secure transactions with the digital services provider **3**. Usually, these transactions will have to do with certain measurements **4** performed by the insecure device. For example, a measurement of energy consumed by a legacy electric vehicle charger (insecure device) while recharging an electric car will be secured by the secure device, so that the legacy electric vehicle charger can securely transmit it to the external digital services provider (e.g. responsible for managing the charging and billing services associated with the legacy electric vehicle charger). Thus, in the proposed example, the operator of the legacy electric vehicle charger obtains the value established for recharging the vehicle.

Other optional actors (represented in Figure 1 in dashed line) could also intervene in the operation scenario, in particular a user **5** who operates the insecure device, directly or remotely, and an actor to act as a gateway **6** between the insecure device and the external digital services provider. Continuing with the previous example, the user (owner of the electric car) could operate the legacy electric vehicle charger (e.g. with the aim of selecting a certain recharging mode), both directly if the legacy electric vehicle charger has a terminal with buttons, keyboard and/or screen, or remotely if the user has an application in their smartphone that facilitates communication with the legacy electric vehicle charger (e.g. likewise enabling the selection of a certain recharging mode). Continuing with this example, both the application itself installed in the smartphone of the user, as another specific actor for connectivity to the Internet (e.g. a router), can function as a gateway of the transactions between the legacy electric vehicle charger (e.g. if does not have a direct connection to the Internet) and the external digital services provider (in this example a charging and billing services provider).

The intervention of the security device in the operation scenario is essential to mitigate the possible security risks when performing transactions. Specifically, the security device must prevent, on the one hand, the identity of the insecure device from being stolen by a malicious agent (this malicious agent being able to operate on behalf of the insecure device) and, on the other hand, prevent the information related to the transaction from being modified by a malicious agent (e.g. such that the malicious agent can reduce or increase the amount of a recharge of an electric car contrary to the agreed fee). The specific aim of defining the security device and the method it executes in a coordinated manner with the insecure device is to avoid these risks, in a highly efficient manner based on cryptographic elements (cryptographic hardware, cryptographic algorithms and cryptographic materials) present in the current market.

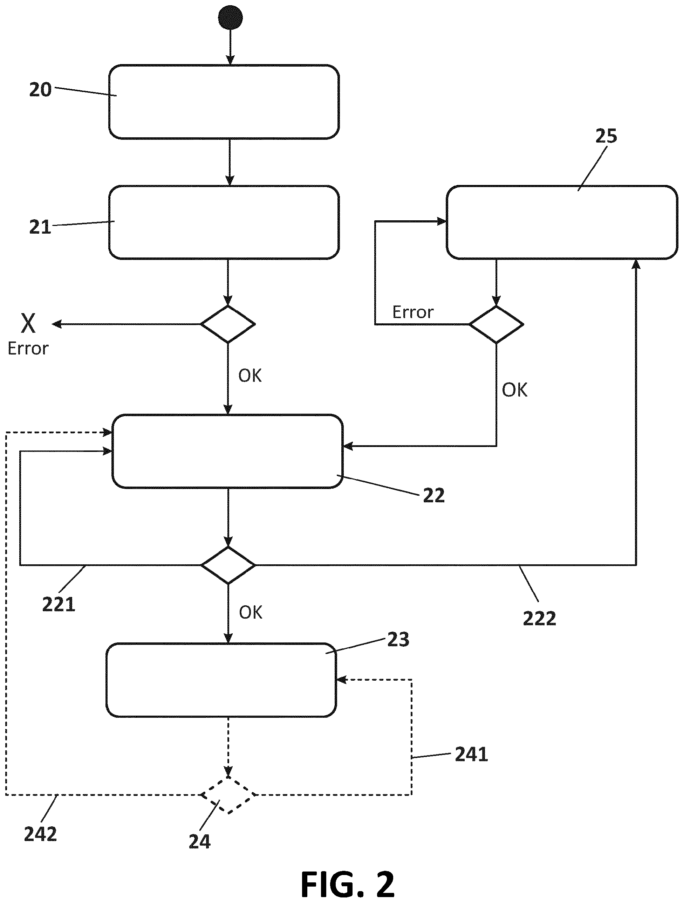

**Figure 2** represents the different stages of the proposed method. In the most basic version of this method (Figure 2, elements in continuous line), the security device: is initialized **20**, being supplied with the very cryptographic materials of the hardware cryptographic element (HCE, present in the secure device and not in the insecure device, as seen in Figure 1) thereof, with an essential and generic nature, which will enable the supply of other specific cryptographic materials; it is paired **21** with the insecure device, being supplied with specific cryptographic material so that the secure device can be securely connected with the insecure device and so that the secure device can secure electronic transactions generated by the insecure device (intended for the external services provider), and further sends cryptographic material to the insecure device so that it can recognize it (authenticate it) securely; it authenticates **22** the insecure device, using specific cryptographic material generated in the pairing/repairing stage; and finally in the operation stage **23,** it performs cryptographic operations at the request of the insecure device, in order to secure electronic transactions intended for the external services provider. Within this method, the stage of authenticating the insecure device mitigates the risk of the identity of the insecure device being stolen by a malicious agent. Moreover, the operation stage mitigates the risk of the transactions being modified by a malicious agent. The other two stages, initialization and pairing/repairing, have an auxiliary function, being supplied with all the cryptographic material to enable the execution thereof.

The basic method, as described in the previous paragraph, has three weak points in specific, well-identified circumstances. In order to increase the security of the method in those circumstances, several partial extensions of the basic method are proposed, which are compatible with each other and therefore can overlap. These extensions can be seen in the dotted line in Figure 2.

The first risk of the basic method is due to the need for the insecure device to store secret cryptographic material, supplied by the secure device in the pairing stage, and which is used in the authentication stage to verify the identity thereof. A malicious agent with temporary physical access to the insecure device and knowledge of the method could extract that secret cryptographic material, install a version of the method and the secret cryptographic material on another device that it controls, and operate on behalf of the insecure device, stealing the identity thereof. In this manner, a malicious agent could generate non-authentic transactions, which would be secured by the secure device. This is due to the fact that the insecure device, unlike the security device and as shown in Figure 1, does not have a hardware cryptographic element (HCE) which enables secret cryptographic material to be securely stored. To limit this risk, the time of the operation stage **23** is limited. As seen in Figure 2 (dashed line), a variant of this method quantifies **24** the time wherein the secure device does not interact with the insecure device, and, as long as it does not exceed **241** a predefined limit, it continues in the operation stage, but if it exceeds **242** the predefined limit (Timeout_Op), it returns to the authentication stage **22**. In each execution of the authentication stage, the secure device checks that the insecure device knows the secret cryptographic material, performs an update of the value of the secret cryptographic material and once again goes to the operation stage **23**. This frequent update of the secret cryptographic material forces the malicious agent to physically access the insecure device frequently, making this attack impractical, lowering the risk thereof.

The extended method according to the previous paragraph generates a new risk: if the insecure device loses the cryptographic material which enables it to execute the authentication stage successfully, it will not be able to go to the operation stage, and therefore the secure device will not secure the transactions thereof, which will negatively affect the availability of the service of the insecure device. This loss of cryptographic material can happen both if the physical medium inside the insecure device wherein this cryptographic material is stored is corrupted (intentionally or unintentionally), such as if a malicious agent with physical access to the insecure device has managed to extract the cryptographic material, install it on another device and execute the method with the secure device, which will eventually result in an update of the cryptographic material (when it goes from the operation stage to the authentication stage) which will occur in the secure device but not in the insecure device. To mitigate this risk, the basic method includes a repairing state **25**, which enables the value of the secret cryptographic material to be updated both in the secure device and in the insecure device, similarly to how it is performed in the pairing stage, but without performing other operations for supplying cryptographic material which are performed in the pairing stage. The secure device tries the authentication in a loop for a specified number of times **221** and, once the authentication has been attempted that number of times without success **222**, it goes into the repairing state **25**.

The second risk of the basic method occurs if the secure device and the insecure device communicate using a wireless communications protocol without security measures or with obsolete security measures. In this case, it could occur that a malicious agent that knows the method and is located in the vicinity of the insecure device (to access the physical medium of the communications), can carry out attacks referred to as eavesdropping and/or man-in-the-middle. A malicious agent performing an eavesdropping attack is able to know the content of the transactions, which goes against the confidentiality thereof. To mitigate this risk, an extension of the method includes the encryption of the transactions. A malicious agent performing a man-in-the-middle attack is capable of modifying the content of transactions exchanged by the secure device and the insecure device, which goes against the integrity of these transactions. Furthermore, a malicious agent performing a man-in-the-middle attack is capable of inserting new electronic transactions in the communications exchanged between the secure device and the insecure device, which goes against the authenticity of these transactions. In order to mitigate this risk, an extension of the method includes the addition of transaction verification codes, which are generated by the sender (secure device or insecure device) and verified by the receiver (insecure device or secure device).

The third risk of the basic method occurs if the insecure device needs to be paired **25** with the secure device and the secure device operator **30** is not available to introduce the data of the insecure device through the terminal **40**. This situation would block the service of the insecure device. To mitigate this risk, an extension of the method includes the remote management of the repairing process. In order for this procedure to be secure, a digital administrator certificate is installed which enables the identity of the operator of the secure device to be verified when connected remotely.

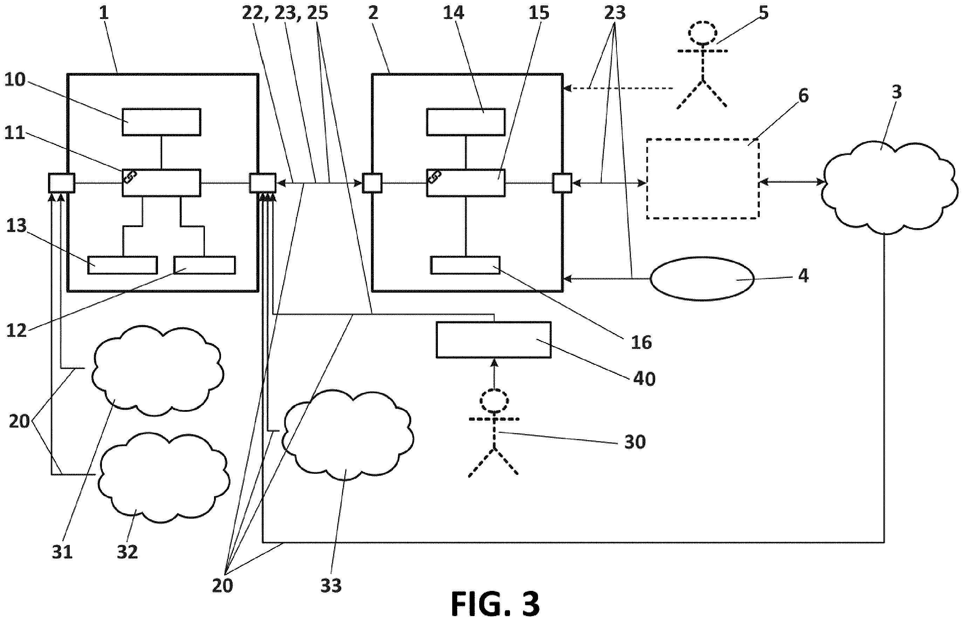

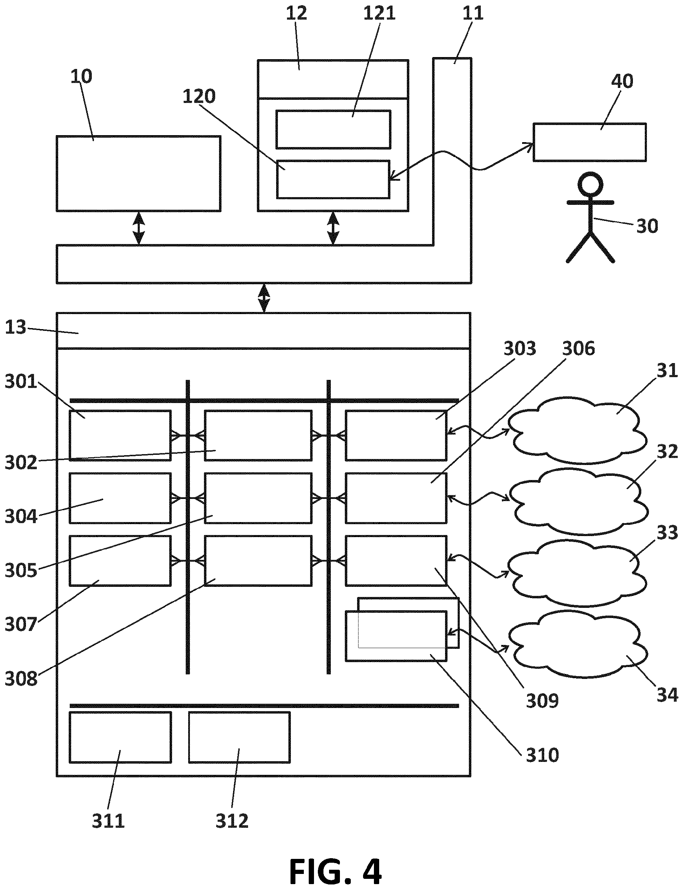

The basic method and the several extensions have the aim of supplying and operating cryptographic elements (cryptographic hardware, cryptographic algorithms and cryptographic materials) present in the market, in the stages of the method (Initialization, (Re)Pairing, Authentication, Operation). In order to perform the supplying and operation of said cryptographic elements, the intervention of a series of actors is required in each of those stages. **Figure 3**, as an extension of Figure 1, identifies all the actors appearing in each of the phases of the method and the mutual interactions thereof. In a complementary manner, **Figure 4** represents in detail the constituent elements managed by the actor participating in all the scenarios of the method: the security device **1**.

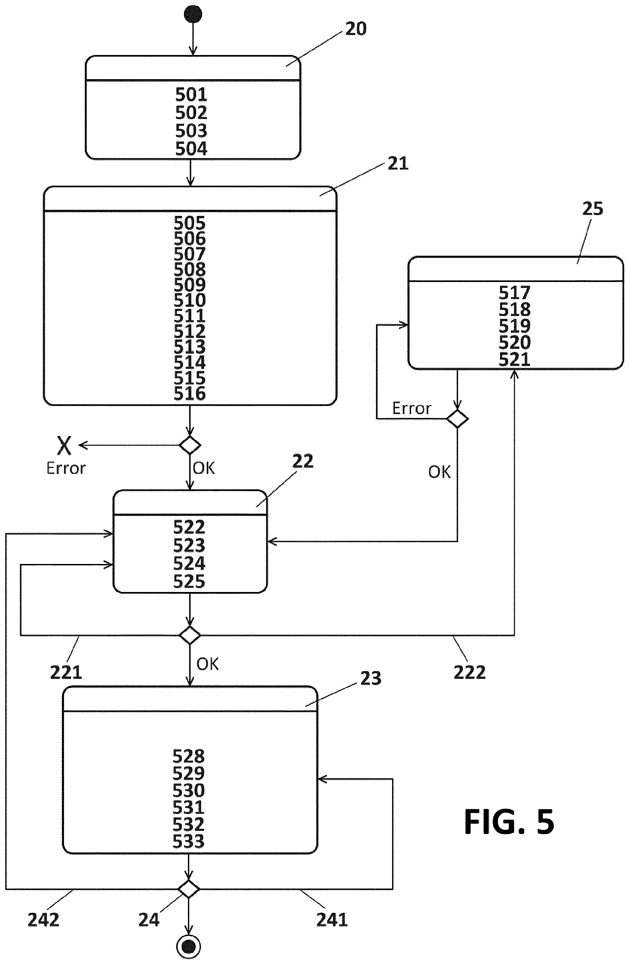

**Figure 5** describes all the stages of the method implemented by the security device, with details of the main steps executed in each phase.

Following the order of execution of the stages established in the method (Figure 2), in the first stage of the method (Initialization **20**) the actors involved (Figure 3) are the security device **1**, the credentials provider of the hardware cryptographic element **31** and the external endorsement credentials provider **32**. The main purpose of this stage is for the secure device to be supplied with a pair of asymmetric cryptographic end keys **305**, **304** (PbK_End, PrK_End) and the digital end certificate **306**. First of all, it is necessary to generate **501** a pair of cryptographic keys of the hardware cryptographic element **302**, **301** (PbK_HCE, PrK_HCE). This pair of keys is generated by the manufacturer of the hardware cryptographic element during the manufacturing process, and cannot be modified later. Both keys can be operated by the security device **1**, but the key PrK_HCE **(301)** cannot be viewed by the security device or by any other actor, only by the security cryptographic element (HCE) **13**. Then it is necessary to supply **502** the digital certificate of the hardware cryptographic element **303**. This digital certificate is supplied by the HCE credentials provider **31**, which may be the very manufacturer of the hardware cryptographic element (HCE), after verifying that the security device manages the private asymmetric key of the hardware cryptographic element, PrK_HCE **(301).** To do so, typically, the hardware cryptographic element generates a certificate signing request (CSR), which must be digitally signed by the HCE credentials provider **31**, the result being the digital HCE certificate **303**. Subsequently, the security device uses the hardware cryptographic element to generate and store **503** the pair of asymmetric cryptographic end keys **304**, **305** (PbK_End, PrK_End). Then the security device requests the external endorsement credentials provider **32** which supplies **504** a digital endorsement certificate **306**, after verifying that the security device manages the private asymmetric end key **304** (PrK_End), which manages the private asymmetric key of the hardware cryptographic element **301** (PrK_HCE), and the security device receiving the digital HCE certificate **303**. Again, a typical manner of supplying this (end) certificate will be from a CSR generated by the security device (through the HCE), which will be signed by the external endorsement credentials provider.

Following the execution order of the stages established in the method (Figure 2), in the second stage of the method (Pairing **21**), the actors involved are (Figure 3) the security device **1**, the external digital services provider **3**, the external identity credentials provider **33**, the terminal **40**, the operator of the security device **30** and the insecure device **2**. The main purposes of this stage are being supplied with cryptographic material (PrK_ID **307**, PbK_ID **308**, ID certificate **309**, root certificates **310**) which enables the security device **1** to communicate securely with the external digital services provider **3** in the later operation stage **23**, and generating and transmitting the secret cryptographic material **311** (SSK1) to the insecure device 2 which will be used by the secure device **1** in order to verify the identity of the insecure device **2** in the subsequent authentication stage **22**. The security device connects **505** to the insecure device and it connects **506** to a configuration terminal **40**. It requests that the operator of the security device **30**, typically an installation technician, introduce **507** information **120** which unequivocally identifies the insecure device **2** through the terminal **40** connected to the secure device. Then, the security device generates **508**, through the hardware cryptographic element (HCE) a pair of asymmetric cryptographic ID keys **307, 308** (PrK_ID, PbK_ID). Then, the security device **1** requests that the external identity credentials provider **33** supply **509** a digital ID certificate **309**, after this provider verifies that the security device manages the private asymmetric ID key **307** (PrK_ID), which manages the private asymmetric end key **304** (PrK_End), and the security device receiving the digital end certificate **306** and the insecure device info **120**. Once again, a typical manner of supplying this (identity) certificate will be from a CSR generated by the security device **1** (through the HCE) **13**. This CSR contains the insecure device info (DI) **120** and will be signed by the external identity credentials provider **33**. In this stage, the security device **1** will also generate, through the hardware cryptographic element (HCE) **13**, a first symmetric session key #1 **311** (SSK1) and optionally a second symmetric session key #2 **312** (SSK2), which is/are sent to the insecure device **2**, this/these key(s) being stored both in the secure device **1** and in the insecure device **2**. Finally, the secure device obtains **510,** through the external digital services provider **3,** the root certificates **310** necessary to validate the identity of the external digital services provider in establishing a secure connection between the security device and external digital services provider in the subsequent operation stage. Secret cryptographic material SSK1 and SSK2 are produced **512, 513**, are sent **514**, **515** to the insecure device and, finally, it disconnects **516** from the terminal.

As an auxiliary stage of the pairing stage **21**, there is also a repairing stage **25**. The actors involved are (Figure 3) the security device **1**, the insecure device **2**, a terminal **40** and the operator of the security device **30**. The main purpose of this stage is to regenerate and transmit the secret cryptographic material **311** (SSK1) and optionally the SSK2 (**312**) to the insecure device which will be used by the secure device to verify the identity of the insecure device in the subsequent authentication stage. The security device connects **517** to the configuration terminal and requests that the operator of the security device, typically an installation technician, introduce information **120** which unequivocally identifies the insecure device through the terminal **40** connected to secure device **1**. The security device verifies **518** that this information is contained in the digital ID certificate **309** and, if so, it sends **519** SSK1 (**311**) and optionally **520** SSK2 (**312**) to the insecure device. Finally, the terminal is disconnected **521**.

Following the execution order of the stages established in the method (Figure 2), in the third stage of the method (Authentication **22**), the actors involved are (Figure 3) the security device **1** and the insecure device **2**. The main purpose of this stage is that the security device **1** verifies the identity of the insecure device **2** (authenticating it), thus enabling it to go to the subsequent operation stage **23**. The security device **1** generates **522**, through the hardware cryptographic element **13** (HCE), a random number RND and sends it **523** to the insecure device. The secure device **1** and the insecure device **2** should apply **524** a first cryptographic unidirectional function #1 (CUF1 ()) to a preset combination (e.g. concatenation) of the random number RND and the first symmetric session key, SSK1 **311**. The insecure device then sends the result thereof to the secure device. The secure device checks **525** if the result thereof matches that of the insecure device. The authentication **22** is successfully completed only if both results match. If the authentication is not successfully completed, a maximum of n retries **221** can be performed. If the n retries are reached without a successful authentication, it returns **222** to the repairing stage **25**.

Following the order of execution of the stages established in the method (Figure 2), in the fourth stage of the method (operation **23**), the actors involved are (Figure 3) the security device **1**, the insecure device **2**, the external digital services provider **3**, and optionally an insecure device user 5 and/or a gateway **6** between the insecure device and the external digital services provider. The main purpose of this stage is that the secure device performs cryptographic operations at the request of the insecure device, in order to secure the transactions that the insecure device sends to the external digital services provider. The basic flow consists of receiving **528** an encrypted operation request, performing **531** the requested operation and sending **533** the result of the operation. The objective is that the security device executes the operation requested by the insecure device, this action being made up of one or a set of messages exchanged between the security device and the insecure device, directly dependent on the requested operation.

Optionally, these messages can be accompanied by a message verification code obtained by means of a cryptographic unidirectional function #2 (CUF2 ()) to a data combination including at least the value of the first symmetric session key (SSK1) and the message to be sent. The sender device could calculate the CUF2 () of the message set plus the SSK1 plus the sequence number of the message and send it attached to the message, while the receiver device would perform the same operation **530** by using the message plus the SSK1 plus the sequence number following the last one stored and compare it with the message verification code received. If both results were satisfactory, the message would be validated, otherwise, the operation would not initialize or be cancelled and it would return to the authentication stage of the method.

Optionally to the previous consideration, the messages exchanged between the security device and the insecure device could be encrypted by performing a symmetric encryption/decryption operation using the session key SSK2. The sender device would encrypt each message of the communication with the insecure device and the receiver device would decrypt them. Thus, each operation request is decrypted **529** by the secure device and each result of the operation is encrypted **532** by the secure device before sending it. The element which is secure against the detection of inconsistent messages would not initialize or it would cancel the operation in progress and would return to the authentication stage **22** of the method.

Optionally to the previous consideration, there can be two additional steps for updating **526** the first symmetric session key SSK1 using a third unidirectional cryptographic function (cryptographic unidirectional function # 3, CUF3 ()) that applies to at least the previous value of SSK1, and for updating **527** the second symmetric session key, SSK2 if any, using a fourth unidirectional cryptographic function (cryptographic unidirectional function # 4, CUF4 ()) that applies to at least the previous value of SSK2.

Below is a detailed list of the cryptographic operations that the security device can execute, through the hardware cryptographic element thereof, at the request of the insecure device and which elements managed by the security device (Figure 4) are involved.
- Generation of secure random numbers: The insecure device could request a secure random number (high entropy) from the security device. To do so, the security device would execute the necessary instructions of the instructions stored **121** in the memory in order to request a random number from the HCE using the internal Hardware Random Number Generator. The result is sent to the insecure device.
- Message hash: The insecure device could request a hash of a message from the security device. To do so, the security device would execute the necessary instructions stored in the memory in order to request a hash of the message from the HCE which would be returned to the insecure device.
- Cryptographic unidirectional function: The insecure device could request that the security device calculate a unidirectional operation on a message by using generally secret cryptographic materials in order to obtain a unique message given that combination of elements. These functions are typically used to generate Message Authentication Codes. The insecure device would transmit the request for said operation to the security device together with the message and the desired cryptographic material in order to complete the operation, or it would select the cryptographic material already stored in the security device. The result of the operation would be transmitted to the insecure device.
- Symmetric key generation: The insecure device could request that the security device generate a secure symmetric key, either derived from a given seed or randomly. The security device would execute the necessary instructions stored in the memory in order to request a key derivation, if the original seed is known, or a new symmetric key from the HCE. In either case, the key is obtained as a result of executing: in the first case, a secure hash algorithm by using the provided seed concatenation and a real random number (Hardware Random Number) generated by the HRNG (Hardware Random Number Generator) that is physically located in the HCE; and in the second case, only by the real random number generated by the HRNG. The generated symmetric key could be returned to the insecure device or, in the absence thereof, if it was requested by the insecure device, it could be stored in the internal memory of the HCE and be reserved for future uses.
- Asymmetric key generation: apart from the fact that in the rest of the stages, this operation is also performed and it is requested by the manufacturer or the microprocessor, the insecure device could request the generation of a pair of asymmetric keys in order to perform certain specific operations, such as deriving a session key. The security device would execute the necessary instructions stored in the memory in order to request that the HCE generate a pair of asymmetric keys. The pair of keys would necessarily be stored in a non-permanent manner in the internal memory of the HCE, and only the public component of the pair of keys would be transmitted to the insecure device.
- Symmetric key negotiation: The insecure device could request that the security device derive a symmetric session key using a non-permanent asymmetric key stored in the HCE. To do so, the insecure device would send, together with the operation request, a public key (understood by the other party with which the session is negotiated) to the security device. This would execute the necessary instructions stored in the memory in order to request that the HCE execute the Diffie-Hellman algorithm that would use the non-permanent public key stored in the HCE and the public key received from the insecure device as input parameters. The result, a symmetric key, would either be transferred to the insecure device, or stored in the internal memory of the HCE if thus requested in order to be used in future operations.
- Encryption of discrete messages: If the insecure device requires a message to be encrypted, it would request the encryption from the security device, transmitting the data to be encrypted and the symmetric key with which the encryption is to be performed, or by selecting one of the symmetric keys stored in the security device. The security device would perform the data encryption by using the HCE and it would return the result to the insecure device.
- Decryption of discrete messages: If the insecure device requires a message to be decrypted, it would request the decryption from the security device, transmitting the data to be decrypted and the symmetric key with which the decryption was performed, or by selecting one of the symmetric keys stored in the security device. The security device would perform the data decryption by using the HCE and it would return the result to the insecure device.
- Encryption/decryption of a communication channel: If the insecure device requires an entire communication channel to be encrypted, it could instruct the security device to encrypt a data flow with a specific symmetric key, either provided by the insecure device or by means of reference if it were stored in a security device. The security device would initialize the encryption operation by using the HCE and would maintain the context of the encryption in order to prevent inconsistencies. The encrypted/decrypted data flows would be transmitted to the insecure device.
- Digital signature of a message: The insecure device could request that the security device sign a message on its behalf, thus obtaining proof that the data contained therein has not been tampered with. To do so, the insecure device would transmit the request for the operation together with the message to be signed to the security device. The security device would execute the instructions stored in the memory necessary to carry out said operation. The operation is made up of two sub-operations: first, hashing the message (hash or secure unidirectional function); second, performing a signature operation of said hash by using the private key **307** PrK_ID. The result of the operation is the signature that is transmitted together with the certificate ID **309** to the insecure device. [The digital services provider hashes the message and performs a signature validation operation with the public key PbK_ID (**308**) contained in the certificate. Additionally, it verifies the chain of trust of the certificate in order to verify the identity of the insecure device].
- Demonstration of the identity of the insecure device: The external digital services provider could request proof of identity from the insecure device. This request should include at least one random message that would have been generated at the time of the request. To do so, the insecure device would request said operation from the security device, attaching the random message. The security device would execute the instructions corresponding to said operation stored in the memory. These instructions will necessarily request a cryptographic signing operation from the HCE that will use the private component PrK_ID (**307**), only accessible from the HCE, and the random message. These restrictions on access to the private key make the system secure. The security device would send the ID Certificate (**309**) stored in the HCE together with the result of the signature operation of the random message to the insecure device. This in turn would send it to the external digital services provider **3** in order to proceed with the verification thereof, being able to rely on the digital identities provider **33** if necessary.
- identity verification: The insecure device could require that the security device verify the identity of a subject external to the system, typically an external digital services provider. The insecure device would transmit the request for said operation to the security device together with the digital certificate of the subject. The security device would execute the instructions corresponding to said operation stored in the memory. These instructions directly involve the HCE, which performs two operations in two phases. First, the HCE generates a random message which the security device must send to the insecure device and then in turn to the external subject. The external subject must sign the message with the private component of the public key contained in the digital certificate and send it to the insecure device, which in turn sends it to the security device. Second, the HCE receives the signature of the message and verifies that it corresponds to the public key of the certificate, in turn verifying that the certificate belongs to the chain of trust of one of the root certificates **310** stored in the HCE. The result of the operation is transmitted to the insecure device.
- Signature verification: The insecure device could request that the security device verify a signature. To do so, the insecure device would transfer, together with the request for said operation, the signature to be verified and a public key. The security device would execute the instructions stored in the memory necessary to carry out said operation wherein the HCE intervenes, wherein it verifies that the received signature was performed with the private key associated with the public key received. The result is transmitted to the insecure device.
- Verification of authenticity and integrity of the message: The insecure device could request the verification of the authenticity of a message and the integrity of the data thereof, typically a message coming from the external digital services provider. To do so, it would request that the security device carry out said operation, transmitting the message, the message signature and a digital certificate of the alleged sender to it. The security device would perform the operation wherein the HCE would participate, which would perform the following sub-operations: calculation of the hash of the message by using the algorithm indicated by the digital signature of the message and comparison with the hash included in the digital signature of the message; verification of the signature using the public key contained in the digital certificate; verification of the chain of trust of the digital certificate using the root certificates **310** (Figure 4) available in the HCE and obtained in previous stages of the method. The result of the three verifications would make it possible to determine if the message really came from the owner of the digital certificate, that the message has not been altered and that the owner of the digital certificate is recognized by a Certification Authority that the security device trusts.

On the level of cryptographic operations, most of them are not explained because for each operation, there are multiple methods to approach it, and above all because there is typically a wide variety of specific algorithms that are already known (e.g. Encryption: AES, Blowfish, Twofish, etc.; Hashing: SHA, SHA-2, SHA-3, Tiger, Whirlpool, etc.).

## Claims

1. An electronic security device, wherein it comprises:
a hardware cryptographic element HCE (13) configured to store a public asymmetric key PbK_HCE (302) and a private asymmetric key PrK_HCE (301), wherein access to the private asymmetric key PrK_HCE is restricted to the hardware cryptographic element HCE, and which is configured to perform the following cryptographic operations: symmetric key generation, asymmetric key generation, token generation, cryptogram generation, digital signature generation, random number generation, cryptographic function execution, negotiation of session keys, digital signature verification, token verification, cryptogram decryption, identity verification;
a processor (10);
a memory (12) configured to store instructions for the execution thereof in the processor;
a hardware interface (11) configured to connect to the processor, memory and the hardware cryptographic element HCE; and
a communication interface configured to establish communication with an insecure electronic device;
wherein the electronic security device is configured to:
obtain, through the hardware cryptographic element HCE, a digital hardware cryptographic element certificate (303) which guarantees the authenticity of the hardware cryptographic element HCE;
generate, through the hardware cryptographic element HCE, a pair of asymmetric end keys (304, 305) which are stored in the hardware cryptographic element HCE itself;
generate, through the hardware cryptographic element HCE, a pair of asymmetric ID keys (307, 308);
obtain, through external services providers that enable electronic transactions and are located outside of the electronic security device, digital root
certificates (310), in response to providing a digital ID certificate (309) thereof and demonstrating that it possesses the asymmetric ID keys;
wherein the processor is configured to execute instructions stored in the memory in order to:
obtain a digital end certificate (306), through an external endorsement credentials provider (32) located outside of the electronic security device, in response to providing a digital end certificate request generated from the asymmetric end keys, and in response to providing the digital hardware cryptographic element certificate (303) and to providing a demonstration of possession of the private asymmetric key of the hardware cryptographic element PrK_HCE (301);
pair (21) the electronic security device (1) with the insecure electronic device (2), which does not integrate cryptographic modules, wherein this pairing implies that the electronic security device obtains, through a terminal (40) connected thereto, information (120) describing the insecure electronic device requesting pairing with the electronic security device;
• wherein the pairing comprises producing, by the electronic security device,
the pair of asymmetric ID keys (307, 308) through the HCE and obtains the digital ID certificate (309), through an external identity credentials provider (33), after providing a digital ID certificate request generated from the asymmetric ID keys and information (120) about the insecure electronic device, and after providing the digital end certificate (306) and a demonstration of the possession of the asymmetric end keys (304, 305), wherein the electronic security device generates a first symmetric session key SSK1 (311) and sends the first symmetric session key SSK1 to the insecure electronic device, and wherein the electronic security device obtains, using the digital ID certificate (309) thereof and a demonstration that it possesses the asymmetric ID keys, digital root certificates (310) which enable secure communications to be negotiated and established in order to perform electronic transactions, through the external services providers which enable electronic transactions, authenticate the insecure electronic device, wherein the electronic security device generates (522), through the HCE, a random number RND, which is used to pose a cryptographic challenge to the insecure electronic device, wherein the electronic security device sends the random number RND to the insecure electronic device, wherein the electronic security device and the insecure electronic device calculate the result of applying (524) one same first cryptographic unidirectional function to a combination of data including at least the first symmetric session key SSK1 and the random number RND, the electronic security device obtaining a first result and the insecure electronic device obtaining a second result, wherein the insecure electronic device sends the second result to the electronic security device, wherein the electronic security device verifies (525) if the second result received matches the first result wherein the authentication is successfully completed if both results match, wherein if both results do not match, the authentication process of the insecure electronic device by the electronic security device will be repeated until both results match or a certain number of retries are reached, wherein if the certain number of retries are reached without successful authentication, the electronic security device initiates a repairing with the insecure electronic device;
and wherein the repairing comprises verifying by the electronic security device if the information about the insecure electronic device is contained in the digital ID certificate, if so, the electronic security device generates a new first symmetric session key SSK1 and sends the new symmetric session key SSK1 to the insecure electronic device, wherein the authentication of the insecure electronic device is performed based on the new first symmetric session key SSK1, if the authentication is successfully completed, execute cryptographic operations in the electronic security device, wherein the insecure electronic device requests, by means of messages sent to the electronic security device, that it perform the cryptographic operations in order to secure electronic transactions, wherein these operations may require the use of asymmetric ID keys and/or digital root certificates, wherein the insecure electronic device can include additional parameters in the request messages, and wherein the electronic security device sends the result of each requested operation or an error code to the insecure electronic device.

2. The device according to claim 1, wherein the processor (10) executes instructions stored in the memory in order to send the first symmetric session key SSK1 to the insecure electronic device after verifying the identity thereof.

3. The device according to claim 2, further configured to generate, through the hardware cryptographic element, a second symmetric session key SSK2 (312); and wherein the processor executes instructions stored in the memory in order to send the second symmetric session key SSK2 to the insecure electronic device after verifying the identity thereof.

4. The device according to claims 1, 2 or 3, wherein the pair of asymmetric keys PbK_HCE (302), PrK_HCE (301) is RSA.

5. The device according to claims 1, 2 or 3, wherein the pair of asymmetric keys PbK_HCE (302), PrK_HCE (301) is ECC.

6. The device according to claims 1, 2 or 3, wherein the communication interface with the insecure electronic device is I2C.

7. The device according to claims 1, 2 or 3, wherein the communication interface with the insecure electronic device is SPI.

8. The device according to claims 1, 2 or 3, wherein the communication interface with the insecure electronic device is USB.

9. The device according to claims 1, 2 or 3, wherein the communication interface with the insecure electronic device is UART.

10. The device according to claims 1, 2 or 3, wherein the communication interface with the insecure device is Bluetooth.

11. The device according to claims 1, 2 or 3, wherein the communication interface with the insecure electronic device is NFC.

12. A method to be executed in an electronic security device, wherein the method is **characterized in that** it comprises the following steps:
- initializing (20) the electronic security device (1), including initializing the hardware cryptographic element HCE (13) obtaining a public asymmetric key PbK_HCE (302) which will be exposed outside of the hardware cryptographic element HCE and a private asymmetric key PrK_HCE (301) which will not be exposed outside of the hardware cryptographic element HCE, wherein the access to the private asymmetric key PrK_HCE is restricted to the hardware cryptographic element HCE, and also obtaining a digital HCE certificate (303) which guarantees the authenticity of the hardware cryptographic element HCE;
wherein the electronic security device produces a pair of asymmetric end keys (304,305) through the hardware cryptographic element HCE, and wherein the electronic security device obtains a digital end certificate (306), through an external endorsement credentials provider (32), after providing an digital end certificate request generated from the asymmetric end keys and after providing the hardware cryptographic element certificate and a demonstration of the possession of the private asymmetric key of the hardware cryptographic element (PrK_HCE);
- pairing (21) the electronic security device (1) with an insecure electronic device (2), which does not integrate cryptographic modules, wherein this pairing implies that the electronic security device obtains, through a terminal (40) connected to it, information (120) describing the insecure electronic device requesting paring with the electronic security device,
• wherein the pairing comprises producing, by the electronic device, a pair of asymmetric ID keys (307, 308) through the HCE and obtains a digital ID certificate (309), through an external identity credentials provider (33), after providing a digital ID certificate request generated from the asymmetric ID keys and information (120) about the insecure electronic device, and after providing the digital end certificate (306) and a demonstration of the possession of the asymmetric end keys (304, 305), wherein the electronic security device generates a first symmetric session key SSK1 (311) and sends the first symmetric session key SSK1 to the insecure electronic device, and wherein the electronic security device obtains, using the digital ID certificate (309) thereof and a demonstration that it possesses the asymmetric ID keys, digital root certificates (310) which enable secure communications to be negotiated and established in order to perform electronic transactions, through the external services providers which enable electronic transactions,
- authenticating (22) the insecure electronic device by the electronic security device, wherein both devices communicate using a communication interface present in both of them, wherein the electronic security device generates (522), through the HCE, a random number RND, which is used to pose a cryptographic challenge to the insecure electronic device, wherein the electronic security device sends the random number RND to the insecure electronic device, wherein the electronic security device and the insecure electronic device calculate the result of applying (524) one same first cryptographic unidirectional function to a combination of data including at least the first symmetric session key SSK1 and the random number RND, the electronic security device obtaining a first result and the insecure electronic device obtaining a second result, wherein the insecure electronic device sends the second result to the electronic security device, wherein the electronic security device verifies (525) if the second result received matches the first result, wherein the authentication is successfully completed if both results match, wherein if both results do not match, the authentication process of the insecure electronic device by the electronic security device will be repeated until both results match or a certain number of retries are reached, wherein if the certain number of retries is reached, the electronic security device initiates a repairing with the insecure electronic device; and wherein the repairing comprises verifying by the electronic security device if the information about the insecure device is contained in the digital ID certificate, if so, the electronic security device generates a new first symmetric session key SSK1 and sends the new symmetric session key SSK1 to the insecure electronic device, wherein the authentication of the insecure electronic device is performed based on the new first symmetric session key SSK1,
- if the authentication is successfully completed, executing (23) cryptographic operations in the electronic security device wherein the insecure electronic device requests, by means of messages sent to the electronic security device, that it perform the cryptographic operations in order to secure electronic transactions, wherein these operations may require the use of asymmetric ID keys and/or digital root certificates, wherein the insecure electronic device can include additional parameters in the request messages, and wherein the electronic security device sends the result of each requested operation or an error code to the insecure electronic device.

13. The method according to claim 12, wherein when executing the cryptographic operations in the electronic security device, all the request and response messages exchanged by the insecure electronic device and the electronic security device are accompanied by a verification code obtained by means of the application of a second cryptographic unidirectional function to a combination of data which includes at least the value of the first symmetric session key SSK1 and the message to be sent.

14. The method according to claims 12 or 13, wherein pairing the electronic security device with the insecure electronic device comprises generating, by the electronic security device, a second symmetric session key SSK2 (312) and sending it to the insecure device, wherein in the process of executing the cryptographic operations in the electronic security device, all the messages exchanged by the security device and the insecure electronic device are encrypted before being sent and decrypted after being received, using the second symmetric session key SSK2 to do so.

15. The method according to claims 12, 13 or 14, wherein executing the cryptographic operations in the electronic security device comprises that after exceeding a maximum time since the last cryptographic operation request received by the electronic security device originating from the insecure electronic device, the next cryptographic operation request received by the electronic security device originating from the insecure electronic device leads to returning to the authentication process of the insecure electronic device by the electronic security device, after which the electronic security device and the insecure electronic device update the value of the first symmetric session key SSK1 using a third unidirectional cryptographic function to obtain it which is applied to at least the previous value of SSK1, after which the electronic security device and the insecure electronic device update the value of the second symmetric session key SSK2 if there was one, using a fourth unidirectional cryptographic function to obtain it which is applied to at least the previous value of SSK2, after which both devices return to the process of executing cryptographic operations in the electronic security device.

16. The method according to claims 12, 13, 14 or 15, wherein pairing the electronic security device with the insecure electronic device further comprises obtaining by the electronic security device, using the digital ID certificate and a demonstration that it possesses the asymmetric ID keys, a digital remote administration certificate which enables the electronic security device to establish secure communications with a remote administrator of the electronic security device, and wherein authenticating the insecure electronic device by the electronic security device, after reaching the certain number of retries, comprises connecting, by the electronic security device, to the remote administrator by using at least the digital administrator certificate and the asymmetric ID keys, wherein if the electronic security device receives an authorization message from the remote administrator, the electronic security device sends the first symmetric session key SSK1, and the second symmetric session key SSK2 if there was one, to the insecure electronic device, and continues the process of authenticating the insecure electronic device by the electronic security device.

## Patentansprüche

1. Elektronisches Sicherheitsgerät, umfassend:
ein Hardware-Kryptografieelement (Hardware Cryptographic Element bzw. HCE) (13), das konfiguriert ist zum Speichern eines öffentlichen asymmetrischen Schlüssels PbK_HCE (302) und eines privaten asymmetrischen Schlüssels PrK_HCE (301), wobei der Zugriff auf den privaten asymmetrischen Schlüssel PrK_HCE auf das Hardware-Kryptograieelement HCE beschränkt ist, und weiterhin konfiguriert ist zum Durchführen der folgenden kryptografischen Operationen: Erzeugen eines symmetrischen Schüssels, Erzeugen eines asymmetrischen Schlüssels, Erzeugen eines Tokens, Erzeugen eines Kryptogramms, Erzeugen einer digitalen Signatur, Erzeugen einer Zufallszahl, Ausführen von kryptografischen Funktionen, Aushandeln von Sitzungsschlüsseln, Verifizieren einer digitalen Signatur, Verifizieren eines Tokens, Entschlüsseln eines Kryptogramms und Verifizieren einer Identität,
einen Prozessor (10),
einen Speicher (12), der konfiguriert ist zum Speichern von Befehlen für die Ausführung derselben in dem Prozessor,
eine Hardware-Schnittstelle (11), die konfiguriert ist für eine Verbindung mit dem Prozessor, dem Speicher und dem Hardware-Kryptografieelement HCE, und
eine Kommunikationsschnittstelle, die konfiguriert ist zum Herstellen einer Kommunikation mit einem unsicheren elektronischen Gerät,
wobei das elektronische Sicherheitsgerät konfiguriert ist zum:
Erhalten, durch das Hardware-Kryptografieelement HCE, eines digitalen Hardware-Kryptografieelement-Zertifikats (303), das die Authentizität des Hardware-Kryptografieelements HCE garantiert,
Erzeugen, durch das Hardware-Kryptografieelement HCE, eines Paars von asymmetrischen Endschlüsseln (304, 305), die in dem Hardware-Kryptografieelement HCE selbst gespeichert werden,
Erzeugen, durch das Hardware-Kryptografieelement HCE, eines Paars von asymmetrischen ID-Schlüsseln (307, 308),
Erhalten, durch externe Dienstanbieter, die elektronische Transaktionen ermöglichen und sich außerhalb des elektronischen Sicherheitsgeräts befinden, von digitalen Root-Zertifikaten (310) in Reaktion auf das Vorsehen eines entsprechenden digitalen ID-Zertifikats (309) und das Demonstrieren, das es die asymmetrischen ID-Schlüssel besitzt,
wobei der Prozessor konfiguriert ist zum Ausführen von in dem Speicher gespeicherten Befehlen zum:
Erhalten eines digitalen Endzertifikats (306), durch einen externen Berechtigungsbeglaubigungs-Provider (32), der sich außerhalb des elektronischen Sicherheitsgeräts befindet, in Reaktion auf das Vorsehen einer aus den asymmetrischen Endschlüsseln erzeugten Digitales-Endzertifikat-Anfrage und in Reaktion auf das Vorsehen des digitalen Hardware-Kryptografieelement-Zertifikats (303) und auf das Vorsehen einer Demonstration des Besitzes des privaten asymmetrischen Schlüssels PrK-HCE (301) des Hardware-Kryptografieelements,
Paaren (21) des elektronischen Sicherheitsgeräts (1) mit dem unsicheren elektronischen Gerät (2), in dem keine kryptografischen Module integriert sind, wobei diese Paarung umfasst, dass das elektronische Sicherheitsgerät über ein damit verbundenes Endgerät (40) Informationen (120) erhält, die das unsichere elektronische Gerät, das eine Paarung mit dem elektronischen Sicherheitsgerät anfragt, beschreiben,
wobei das Paaren das Erzeugen, durch das elektronische Sicherheitsgerät, des Pars von asymmetrischen ID-Schlüsseln (307, 308) durch das HCE umfasst und das digitale ID-Zertifikat (309) mittels eines externen Identitätsbeglaubigungs-Providers (33) erhält, nachdem eine aus den asymmetrischen ID-Schlüsseln und Informationen (120) zu dem unsicheren elektronischen Gerät erzeugte Digitale-ID-Zertifikat-Anfrage vorgesehen wurde und nachdem das digitale Endzertifikat (306) und eine Demonstration des Besitzes der asymmetrischen Endschlüssel (304, 305) vorgesehen wurden, wobei das elektronische Sicherheitsgerät einen ersten symmetrischen Sitzungsschlüssel SSK1 (311) erzeugt und den ersten symmetrischen Sitzungsschlüssel SSK1 an das unsichere elektronische Gerät sendet, und wobei das elektronische Sicherheitsgerät, unter Verwendung des entsprechenden digitalen ID-Zertifikats (309) und einer Demonstration, dass es die asymmetrischen ID-Schlüssel besitzt, digitale Root-Zertifikate (310), die das Aushandeln und Herstellen von sicheren Kommunikationen für das Durchführen von elektronischen Transaktionen ermöglichen, über die externen Diensteanbieter, die elektronische Transaktionen ermöglichen, erhält,
Authentifizieren des unsicheren elektronischen Geräts, wobei das elektronische Sicherheitsgerät, über das HCE, eine Zufallszahl RND erzeugt (522), die verwendet wird, um eine kryptografische Herausforderung für das unsichere elektronische Gerät zu stellen, wobei das elektronische Sicherheitsgerät die Zufallszahl RND an das unsichere elektronische Gerät sendet, wobei das elektronische Sicherheitsgerät und das unsichere elektronische Gerät das Ergebnis des Anwendens (524) einer gleichen ersten kryptografischen unidirektionalen Funktion auf eine Kombination von Daten einschließlich wenigstens des ersten symmetrischen Sitzungsschlüssels SSK1 und der Zufallszahl RND berechnen, wobei das elektronische Sicherheitsgerät ein erstes Ergebnis erhält und das unsichere elektronische Gerät ein zweites Ergebnis erhält, wobei das unsichere elektronische Gerät das zweite Ergebnis an das elektronische Sicherheitsgerät sendet, wobei das elektronische Sicherheitsgerät verifiziert (525), ob das empfangene zweite Ergebnis mit dem ersten Ergebnis übereinstimmt, wobei die Authentifizierung erfolgreich abgeschlossen wird, wenn die beiden Ergebnisse übereinstimmen, und wobei, wenn die beiden Ergebnisse nicht übereinstimmen, der Authentifizierungsprozess des unsicheren elektronischen Geräts durch das elektronische Sicherheitsgerät wiederholt wird, bis die beiden Ergebnisse übereinstimmen oder eine bestimmte Anzahl von erneuten Versuchen erreicht wird, wobei, wenn die bestimmte Anzahl von erneuten Versuchen ohne eine erfolgreiche Authentifizierung erreicht wird, das elektronische Sicherheitsgerät eine erneute Paarung mit dem unsicheren elektronischen Gerät einleitet,
wobei die erneute Paarung das Verifizieren, durch das elektronische Sicherheitsgerät, ob die Informationen zu dem unsicheren elektronischen Gerät in dem digitalen ID-Zertifikat enthalten sind, umfasst, und, wenn dies der Fall ist, das elektronische Sicherheitsgerät einen neuen ersten symmetrischen Sitzungsschlüssel SSK1 erzeugt und den neuen symmetrischen Sitzungsschlüssel SSK1 an das unsichere elektronische Gerät sendet, wobei die Authentifizierung des unsicheren elektronischen Geräts basierend auf dem neuen ersten symmetrischen Sitzungsschlüssel durchgeführt wird,
wenn die Authentifizierung erfolgreich abgeschlossen wird, Ausführen von kryptografischen Operationen in dem elektronischen Sicherheitsgerät, wobei das unsichere elektronische Gerät mittels an das elektronische Sicherheitsgerät gesendeter Nachrichten anfragt, dass dieses die kryptografischen Operationen für das Sichern von elektronischen Transaktionen durchführt, wobei diese Operationen die Verwendung von asymmetrischen ID-Schlüsseln und/oder digitalen Root-Zertifikaten erfordern können, wobei das unsichere elektronische Gerät zusätzliche Parameter in die Anfragenachrichten einfügen kann, und wobei das elektronische Sicherheitsgerät das Ergebnis jeder angefragten Operation oder einen Fehlercode an das unsichere elektronische Gerät sendet.

2. Gerät nach Anspruch 1, wobei der Prozessor (10) in dem Speicher gespeicherte Befehle ausführt, um den ersten symmetrischen Sitzungsschlüssel SSK1 an das unsichere elektronische Gerät nach dem Verifizieren der Identität desselben zu senden.

3. Gerät nach Anspruch 2, das weiterhin konfiguriert ist zum Erzeugen, durch das Hardware-Kryptografieelement, eines zweiten symmetrischen Sitzungsschlüssels SSK2 (312),
wobei der Prozessor in dem Speicher gespeicherte Befehle ausführt, um den zweiten symmetrischen Sitzungsschlüssel SSK2 an das unsichere elektronische Gerät nach dem Verifizieren der Identität desselben zu senden.

4. Gerät nach Anspruch 1, 2 oder 3, wobei das Paar von asymmetrischen Schlüsseln PbK_HCE (302), PrK_HCE (301) RSA ist.

5. Gerät nach Anspruch 1, 2 oder 3, wobei das Paar von asymmetrischen Schlüsseln PbK_HCE (302), PrK_HCE (301) ECC ist.

6. Gerät nach Anspruch 1, 2 oder 3, wobei die Kommunikationsschnittstelle mit dem unsicheren elektronischen Gerät I2C ist.

7. Gerät nach Anspruch 1, 2 oder 3, wobei die Kommunikationsschnittstelle mit dem unsicheren elektronischen Gerät SPI ist.

8. Gerät nach Anspruch 1, 2 oder 3, wobei die Kommunikationsschnittstelle mit dem unsicheren elektronischen Gerät USB ist.

9. Gerät nach Anspruch 1, 2 oder 3, wobei die Kommunikationsschnittstelle mit dem unsicheren elektronischen Gerät UART ist.

10. Gerät nach Anspruch 1, 2 oder 3, wobei die Kommunikationsschnittstelle mit dem unsicheren Gerät Bluetooth ist.

11. Gerät nach Anspruch 1, 2 oder 3, wobei die Kommunikationsschnittstelle mit dem unsicheren elektronischen Gerät NFC ist.

12. Verfahren für die Ausführung in einem elektronischen Sicherheitsgerät, wobei das Verfahren **dadurch gekennzeichnet ist, dass** es die folgenden Schritte umfasst:
- Initialisieren (20) des elektronischen Sicherheitsgeräts (1) einschließlich des Initialisierens eines Hardware-Kryptografieelements (Hardware Cryptographic Element bzw. HCE) (13), des Erhaltens eines öffentlichen asymmetrischen Schlüssels PbK_HCE (302), der außerhalb des Hardware-Kryptografieelements HCE exponiert wird, und eines privaten asymmetrischen Schlüssels PrK_HCE (301), der nicht außerhalb des Hardware-Kryptografieelements HCE exponiert wird, wobei der Zugang zu dem privaten asymmetrischen Schlüssel PrK_HCE auf das Hardware-Kryptografieelement HCE beschränkt ist, und weiterhin des Erhaltens eines digitalen HCE-Zertifikats (303), das die Authentizität des Hardware-Kryptografieelements HCE garantiert,
wobei das elektronische Sicherheitsgerät ein Paar von asymmetrischen Endschlüsseln (304, 305) mittels des Hardware-Kryptografieelements HCE erzeugt und wobei das elektronische Sicherheitsgerät ein digitales Endzertifikat (306) durch einen externen Berechtigungsbeglaubigungs-Provider (32) erhält, nachdem eine aus den asymmetrischen Endschlüsseln erzeugte Digitales-Endzertifikat-Anfrage vorgesehen wurde und nachdem das Hardware-Kryptografieelement-Zertifikat und eine Demonstration des Besitzes des privaten asymmetrischen Schlüssels (PrK_HCE) des Hardware-Kryptografieelements HCE vorgesehen wurden,
- Paaren (21) des elektronischen Sicherheitsgeräts (1) mit einem unsicheren elektronischen Gerät (2), in dem keine kryptografischen Module integriert sind, wobei diese Paarung umfasst, dass das elektronische Sicherheitsgerät, über ein damit verbundenes Endgerät (40), Informationen (120) erhält, die das unsichere Gerät, das eine Paarung mit dem elektronischen Sicherheitsgerät anfragt, beschreiben,
wobei das Paaren das Erzeugen, durch das elektronische Gerät, eines Pars von asymmetrischen ID-Schlüsseln (307, 308) durch das HCE umfasst und das digitale ID-Zertifikat (309) mittels eines externen Identitätsbeglaubigungs-Providers (33) erhält, nachdem eine aus den asymmetrischen ID-Schlüsseln und Informationen (120) zu dem unsicheren elektronischen Gerät erzeugte Digitale-ID-Zertifikat-Anfrage vorgesehen wurde und nachdem das digitale Endzertifikat (306) und eine Demonstration des Besitzes der asymmetrischen Endschlüssel (304, 305) vorgesehen wurden, wobei das elektronische Sicherheitsgerät einen ersten symmetrischen Sitzungsschlüssel SSK1 (311) erzeugt und den ersten symmetrischen Sitzungsschlüssel SSK1 an das unsichere elektronische Gerät sendet, und wobei das elektronische Sicherheitsgerät, unter Verwendung des entsprechenden digitalen ID-Zertifikats (309) und einer Demonstration, dass es die asymmetrischen ID-Schlüssel besitzt, digitale Root-Zertifikate (310), die das Aushandeln und Herstellen von sicheren Kommunikationen für das Durchführen von elektronischen Transaktionen ermöglichen, über die externen Diensteanbieter, die elektronische Transaktionen ermöglichen, erhält,
- Authentifizieren (22) des unsicheren elektronischen Geräts durch das elektronische Sicherheitsgerät, wobei die beiden Geräte unter Verwendung einer in denselben vorgesehenen Kommunikationsschnittstelle kommunizieren, wobei das elektronische Sicherheitsgerät, durch das HCE, eine Zufallszahl RND erzeugt (522), die verwendet wird, um eine kryptografische Herausforderung für das unsichere elektronische Gerät zu stellen, wobei das elektronische Sicherheitsgerät die Zufallszahl RND an das unsichere elektronische Gerät sendet, wobei das elektronische Sicherheitsgerät und das unsichere elektronische Gerät das Ergebnis des Anwendens (524) einer gleichen ersten kryptografischen unidirektionalen Funktion auf eine Kombination von Daten einschließlich wenigstens des ersten symmetrischen Sitzungsschlüssels SSK1 und der Zufallszahl RND berechnen, wobei das elektronische Sicherheitsgerät ein erstes Ergebnis erhält und das unsichere elektronische Gerät ein zweites Ergebnis erhält, wobei das unsichere elektronische Gerät das zweite Ergebnis an das elektronische Sicherheitsgerät sendet, wobei das elektronische Sicherheitsgerät verifiziert (525), ob das empfangene zweite Ergebnis mit dem ersten Ergebnis übereinstimmt, wobei die Authentifizierung erfolgreich abgeschlossen wird, wenn die beiden Ergebnisse übereinstimmen, wobei, wenn die beiden Ergebnisse nicht übereinstimmen, der Authentifizierungsprozess des unsicheren elektronischen Geräts durch das elektronische Sicherheitsgerät wiederholt wird, bis die beiden Ergebnisse übereinstimmen oder eine bestimmte Anzahl von erneuten Versuchen erreicht wird, wobei, wenn die bestimmte Anzahl von erneuten Versuchen erreicht wird, das elektronische Sicherheitsgerät eine erneute Paarung mit dem unsicheren elektronischen Gerät einleitet, und
wobei das erneute Paaren das Verifizieren, durch das elektronische Sicherheitsgerät, ob die Informationen zu dem unsicheren Gerät in dem digitalen ID-Zertifikat enthalten sind, umfasst, und, wenn dies der Fall ist, das elektronische Sicherheitsgerät einen neuen ersten symmetrischen Sitzungsschlüssel SSK1 erzeugt und den neuen symmetrischen Sitzungsschlüssel SSK1 an das unsichere elektronische Gerät sendet, wobei die Authentifizierung des unsicheren elektronischen Geräts basierend auf dem neuen ersten symmetrischen Sitzungsschlüssel durchgeführt wird,
- wenn die Authentifizierung erfolgreich abgeschlossen wird, Ausführen (23) von kryptografischen Operationen in dem elektronischen Sicherheitsgerät, wobei das unsichere elektronische Gerät mittels an das elektronische Sicherheitsgerät gesendeter Nachrichten anfragt, dass dieses die kryptografischen Operationen für das Sichern von elektronischen Transaktionen durchführt, wobei diese Operationen die Verwendung von asymmetrischen ID-Schlüsseln und/oder digitalen Root-Zertifikaten erfordern können, wobei das unsichere elektronische Gerät zusätzliche Parameter in die Anfragenachrichten einfügen kann, und wobei das elektronische Sicherheitsgerät das Ergebnis jeder angefragten Operation oder einen Fehlercode an das unsichere elektronische Gerät sendet.

13. Verfahren nach Anspruch 12, wobei, wenn die kryptografischen Operationen in dem elektronischen Sicherheitsgerät durchgeführt werden, alle durch das unsichere elektronische Gerät und das elektronische Sicherheitsgerät ausgetauschten Anfrage- und Antwortnachrichten durch einen Verifizierungscode begleitet werden, der mittels des Anwendens einer zweiten kryptografischen unidirektionalen Funktion auf eine Kombination von Daten, die wenigstens den Wert des ersten symmetrischen Sitzungsschlüssels SSK1 und die zu sendende Nachricht enthält, erhalten wird.

14. Verfahren nach Anspruch 12 oder 13, wobei das Paaren des elektronischen Sicherheitsgeräts mit dem unsicheren elektronischen Gerät das Erzeugen, durch das elektronische Sicherheitsgerät, eines zweiten symmetrischen Sitzungsschlüssels SSK2 (312) und das Senden von diesem an das unsichere Gerät umfasst, wobei in dem Prozess zum Ausführen der kryptografischen Operationen in dem elektronischen Sicherheitsgerät alle durch das Sicherheitsgerät und das unsichere elektronische Gerät ausgetauschten Nachrichten, bevor sie gesendet und nach dem Empfangen entschlüsselt werden, unter Verwendung des zweiten symmetrischen Sitzungsschlüssels SSK2 verschlüsselt werden.

15. Verfahren nach Anspruch 12, 13 oder 14, wobei das Ausführen der kryptografischen Operationen in dem elektronischen Sicherheitsgerät umfasst, dass nach dem Überschreiten einer maximalen Zeitdauer seit dem Empfangen der letzten von dem unsicheren elektronischen Gerät stammenden Kryptografische-Operation-Anfrage durch das elektronische Sicherheitsgerät das Empfangen der nächsten von dem unsicheren elektronischen Gerät stammenden Kryptografische-Operation-Anfrage durch das elektronische Sicherheitsgerät zur Folge hat, dass zu dem Authentifizierungsprozess des unsicheren elektronischen Geräts durch das elektronische Sicherheitsgerät zurückgekehrt wird, wobei danach das elektronische Sicherheitsgerät und das unsichere elektronische Gerät den Wert des ersten symmetrischen Sitzungsschlüssels SSK1 unter Verwendung einer dritten unidirektionalen kryptografischen Funktion aktualisieren und auf wenigstens den vorausgehenden Wert von SSK1 anwenden, wobei danach das elektronische Sicherheitsgerät und das unsichere elektronische Gerät den Wert des zweiten symmetrischen Sitzungsschlüssels SSK2, wenn einer vorhanden war, unter Verwendung einer vierten unidirektionalen kryptografischen Funktion aktualisieren und auf wenigstens den vorausgehenden Wert von SSK2 anwenden, wobei danach beide Geräte zu dem Prozess zum Ausführen von kryptografischen Operationen in dem elektronischen Sicherheitsgerät zurückkehren.

16. Verfahren nach Anspruch 12, 13, 14 oder 15, wobei das Paaren des elektronischen Sicherheitsgeräts mit dem unsicheren elektronischen Gerät weiterhin das Erhalten, durch das elektronische Sicherheitsgerät, unter Verwendung des digitalen ID-Zertifikats und einer Demonstration, dass es die asymmetrischen ID-Schlüssel besitzt, eines digitalen Fernadministrationszertifikats, das ermöglicht, dass das elektronische Sicherheitsgerät sichere Kommunikationen mit einem fernen Administrator des elektronischen Sicherheitsgeräts herstellt, umfasst, und
wobei das Authentifizieren des unsicheren elektronischen Geräts durch das elektronische Sicherheitsgerät nach dem Erreichen der bestimmten Anzahl von erneuten Versuchen das Verbinden, durch das elektronische Sicherheitsgerät, mit dem fernen Administrator unter Verwendung wenigstens des digitalen Administratorzertifikats und der asymmetrischen ID-Schlüssel umfasst, wobei, wenn das elektronische Sicherheitsgerät eine Authentifizierungsnachricht von dem fernen Administrator empfängt, das elektronische Sicherheitsgerät den ersten symmetrischen Sitzungsschlüssel SSK1 und den zweiten symmetrischen Sitzungsschlüssel SSK2, wenn einer vorhanden war, an das unsichere elektronische Gerät sendet und den Prozess zum Authentifizieren des unsicheren elektronischen Geräts durch das elektronische Sicherheitsgerät fortsetzt.

## Revendications

1. Dispositif de sécurité électronique, comprenant :
un élément cryptographique matériel, HCE, (13) configuré de manière à stocker une clé asymétrique publique, PbK_HCE, (302) et une clé asymétrique privée, PrK_HCE, (301), dans lequel l'accès à la clé asymétrique privée, PrK_HCE, est limité à l'élément cryptographique matériel, HCE, et lequel est configuré de manière à mettre en oeuvre les opérations cryptographiques suivantes : génération de clés symétriques, génération de clés asymétriques, génération de jetons, génération de cryptogrammes, génération de signatures numériques, génération de nombres aléatoires, exécution de fonctions cryptographiques, négociation de clés de session, vérification de signatures numériques, vérification de jetons, déchiffrement de cryptogrammes, vérification d'identité ;
un processeur (10) ;
une mémoire (12) configurée de manière à stocker des instructions en vue de leur exécution dans le processeur ;
une interface matérielle (11) configurée de manière à se connecter au processeur, à la mémoire et à l'élément cryptographique matériel, HCE ; et
une interface de communication configurée de manière à établir une communication avec un dispositif électronique non sécurisé ;
dans lequel le dispositif de sécurité électronique est configuré de manière à :
obtenir, par l'intermédiaire de l'élément cryptographique matériel, HCE, un certificat numérique d'élément cryptographique matériel (303) qui garantit l'authenticité de l'élément cryptographique matériel, HCE ;
générer, par l'intermédiaire de l'élément cryptographique matériel, HCE, une paire de clés asymétriques finales (304, 305) qui sont stockées dans l'élément cryptographique matériel, HCE, luimême ;
générer, par l'intermédiaire de l'élément cryptographique matériel, HCE, une paire de clés d'identification asymétriques (307, 308) ;
obtenir, par l'intermédiaire de fournisseurs de services externes qui autorisent des transactions électroniques et qui sont situés en dehors du dispositif de sécurité électronique, des certificats racines numériques (310), en réponse à la fourniture d'un certificat d'identification numérique (309) de celui-ci et en réponse à la démonstration que celui-ci possède les clés d'identification asymétriques ;
dans lequel le processeur est configuré de manière à exécuter des instructions stockées dans la mémoire de manière à :
obtenir un certificat numérique final (306), par l'intermédiaire d'un fournisseur de justificatifs d'identité pour approbation externe (32) situé à l'extérieur du dispositif de sécurité électronique, en réponse à la fourniture d'une demande de certificat numérique final générée à partir des clés asymétriques finales, et en réponse à la fourniture du certificat numérique d'élément cryptographique matériel (303) et à la démonstration de la possession de la clé asymétrique privée, PrK_HCE, (301) de l'élément cryptographique matériel, HCE ;
apparier (21) le dispositif de sécurité électronique (1) avec le dispositif électronique non sécurisé (2), lequel n'intègre pas de modules cryptographiques, dans lequel cet appariement implique que le dispositif de sécurité électronique obtienne, par l'intermédiaire d'un terminal (40) qui lui est connecté, des informations (120) décrivant le dispositif électronique non sécurisé demandant à être apparié avec le dispositif de sécurité électronique ;
• dans lequel l'étape d'appariement comprend l'étape consistant à produire, par l'intermédiaire du dispositif de sécurité électronique, la paire de clés d'identification asymétriques (307, 308) par le biais de l'élément HCE, et à obtenir le certificat d'identification numérique (309), par l'intermédiaire d'un fournisseur de justificatifs d'identité pour approbation externe (33), après la fourniture d'une demande de certificat d'identification numérique générée à partir des clés d'identification asymétriques et d'informations (120) concernant le dispositif électronique non sécurisé, et après la fourniture du certificat numérique final (306) et d'une démonstration de la possession des clés asymétriques finales (304, 305), dans lequel le dispositif de sécurité électronique génère une première clé de session symétrique, SSK1, (311) et envoie la première clé de session symétrique, SSK1, au dispositif électronique non sécurisé, et dans lequel le dispositif de sécurité électronique obtient, en utilisant son propre certificat d'identification numérique (309) et une démonstration qu'il possède les clés d'identification asymétriques, des certificats racines numériques (310) qui permettent de négocier et d'établir des communications sécurisées afin de mettre en oeuvre des transactions électroniques, par l'intermédiaire des fournisseurs de services externes qui autorisent les transactions électroniques ;
authentifier le dispositif électronique non sécurisé, dans lequel le dispositif de sécurité électronique génère (522), par l'intermédiaire de l'élément HCE, un nombre aléatoire, RND, qui est utilisé pour lancer un défi cryptographique au dispositif électronique non sécurisé, dans lequel le dispositif de sécurité électronique envoie le nombre aléatoire, RND, au dispositif électronique non sécurisé, dans lequel le dispositif de sécurité électronique et le dispositif électronique non sécurisé calculent le résultat de l'application (524) d'une même première fonction cryptographique unidirectionnelle à une combinaison de données incluant au moins la première clé de session symétrique, SSK1, et le nombre aléatoire, RND, le dispositif de sécurité électronique obtenant un premier résultat et le dispositif électronique non sécurisé obtenant un second résultat, dans lequel le dispositif électronique non sécurisé envoie le second résultat au dispositif de sécurité électronique, dans lequel le dispositif de sécurité électronique vérifie (525) si le second résultat reçu correspond au premier résultat, dans lequel l'authentification est achevée avec succès si les deux résultats correspondent, dans lequel, si les deux résultats ne correspondent pas, le processus d'authentification du dispositif électronique non sécurisé par le dispositif de sécurité électronique sera répété jusqu'à ce que les deux résultats correspondent ou qu'un nombre donné de nouvelles tentatives soit atteint, dans lequel si le nombre donné de nouvelles tentatives est atteint sans que l'authentification ne réussisse, le dispositif de sécurité électronique initie une étape de réparation avec le dispositif électronique non sécurisé ; et
dans lequel l'étape de réparation comprend l'étape consistant à vérifier, par le biais du dispositif de sécurité électronique, si les informations concernant le dispositif électronique non sécurisé sont contenues dans le certificat d'identification numérique, et si tel est le cas, le dispositif de sécurité électronique génère une nouvelle première clé de session symétrique, SSK1, et envoie la nouvelle première clé de session symétrique, SSK1, au dispositif électronique non sécurisé, dans lequel l'authentification du dispositif électronique non sécurisé est mise en oeuvre sur la base de la nouvelle première clé de session symétrique, SSK1 ;
si l'authentification est achevée avec succès, exécuter des opérations cryptographiques dans le dispositif de sécurité électronique, dans lequel le dispositif électronique non sécurisé demande, au moyen de messages envoyés au dispositif de sécurité électronique, que celui-ci mette en oeuvre les opérations cryptographiques afin de sécuriser des transactions électroniques, dans lequel ces opérations peuvent nécessiter l'utilisation de clés d'identification asymétriques et/ou de certificats racines numériques, dans lequel le dispositif électronique non sécurisé peut inclure des paramètres supplémentaires dans les messages de demande, et dans lequel le dispositif de sécurité électronique envoie le résultat de chaque opération demandée ou un code d'erreur au dispositif électronique non sécurisé.

2. Dispositif selon la revendication 1,
dans lequel le processeur (10) exécute des instructions stockées dans la mémoire afin d'envoyer la première clé de session symétrique, SSK1, au dispositif électronique non sécurisé, après avoir vérifié l'identité de celui-ci.

3. Dispositif selon la revendication 2, configuré en outre de manière à générer, par l'intermédiaire de l'élément cryptographique matériel, une seconde clé de session symétrique, SSK2, (312) ; et
dans lequel le processeur exécute des instructions stockées dans la mémoire afin d'envoyer la seconde clé de session symétrique, SSK2, au dispositif électronique non sécurisé après avoir vérifié l'identité de celui-ci.

4. Dispositif selon la revendication 1, 2 ou 3, dans lequel la paire de clés asymétriques PbK_HCE (302), PrK_HCE (301) est une paire de clés RSA.

5. Dispositif selon la revendication 1, 2 ou 3, dans lequel la paire de clés asymétriques PbK_HCE (302), PrK_HCE (301) est une paire de clés ECC.

6. Dispositif selon la revendication 1, 2 ou 3, dans lequel l'interface de communication avec le dispositif électronique non sécurisé est une interface I2C.

7. Dispositif selon la revendication 1, 2 ou 3, dans lequel l'interface de communication avec le dispositif électronique non sécurisé est une interface SPI.

8. Dispositif selon la revendication 1, 2 ou 3, dans lequel l'interface de communication avec le dispositif électronique non sécurisé est une interface USB.

9. Dispositif selon la revendication 1, 2 ou 3, dans lequel l'interface de communication avec le dispositif électronique non sécurisé est une interface UART.

10. Dispositif selon la revendication 1, 2 ou 3, dans lequel l'interface de communication avec le dispositif électronique non sécurisé est une interface Bluetooth.

11. Dispositif selon la revendication 1, 2 ou 3, dans lequel l'interface de communication avec le dispositif électronique non sécurisé est une interface NFC.

12. Procédé à exécuter dans un dispositif de sécurité électronique, dans lequel le procédé est **caractérisé en ce qu'**il comprend les étapes ci-dessous consistant à :
- initialiser (20) le dispositif de sécurité électronique (1), y compris initialiser l'élément cryptographique matériel, HCE, (13), obtenir une clé asymétrique publique (PbK_HCE) (302) qui sera exposée à l'extérieur de l'élément cryptographique matériel, HCE, et une clé asymétrique privée (PrK_HCE) (301) qui ne sera pas exposée à l'extérieur de l'élément cryptographique matériel, HCE, dans lequel l'accès à la clé asymétrique privée, PrK_HCE, est limité à l'élément cryptographique matériel, HCE, et obtenir également un certificat numérique d'élément HCE (303) qui garantit l'authenticité de l'élément cryptographique matériel, HCE ;
dans lequel le dispositif de sécurité électronique produit une paire de clés asymétriques finales (304, 305) par l'intermédiaire de l'élément cryptographique matériel, HCE, et dans lequel le dispositif de sécurité électronique obtient un certificat numérique final (306), par l'intermédiaire d'un fournisseur de justificatifs d'identité pour approbation externe (32), après la fourniture d'une demande de certificat numérique final générée à partir des clés asymétriques finales et après la fourniture du certificat d'élément cryptographique matériel et d'une démonstration de la possession de la clé asymétrique privée, PrK_HCE, de l'élément cryptographique matériel ;
- apparier (21) le dispositif de sécurité électronique (1) avec un dispositif électronique non sécurisé (2), lequel n'intègre pas de modules cryptographiques, dans lequel cet appariement implique que le dispositif de sécurité électronique obtienne, par l'intermédiaire d'un terminal (40) qui lui est connecté, des informations (120) décrivant le dispositif électronique non sécurisé demandant à être apparié avec le dispositif de sécurité électronique ;
• dans lequel l'étape d'appariement comprend l'étape consistant à produire, par l'intermédiaire du dispositif de sécurité électronique, une paire de clés d'identification asymétriques (307, 308) par le biais de l'élément HCE, et à obtenir un certificat d'identification numérique (309), par l'intermédiaire d'un fournisseur de justificatifs d'identité externe (33), après la fourniture d'une demande de certificat d'identification numérique générée à partir des clés d'identification asymétriques et d'informations (120) concernant le dispositif électronique non sécurisé, et après la fourniture du certificat numérique final (306) et d'une démonstration de la possession des clés asymétriques finales (304, 305), dans lequel le dispositif de sécurité électronique génère une première clé de session symétrique, SSK1, (311) et envoie la première clé de session symétrique, SSK1, au dispositif électronique non sécurisé, et dans lequel le dispositif de sécurité électronique obtient, en utilisant son propre certificat d'identification numérique (309) et une démonstration qu'il possède les clés d'identification asymétriques, des certificats racines numériques (310) qui permettent de négocier et d'établir des communications sécurisées afin de mettre en oeuvre des transactions électroniques, par l'intermédiaire des fournisseurs de services externes qui autorisent les transactions électroniques ;
- authentifier (22) le dispositif électronique non sécurisé, par le biais du dispositif de sécurité électronique, dans lequel les deux dispositifs communiquent en utilisant une interface de communication présente dans chacun d'eux, dans lequel le dispositif de sécurité électronique génère (522), par l'intermédiaire de l'élément HCE, un nombre aléatoire, RND, qui est utilisé pour lancer un défi cryptographique au dispositif électronique non sécurisé, dans lequel le dispositif de sécurité électronique envoie le nombre aléatoire, RND, au dispositif électronique non sécurisé, dans lequel le dispositif de sécurité électronique et le dispositif électronique non sécurisé calculent le résultat de l'application (524) d'une même première fonction cryptographique unidirectionnelle à une combinaison de données incluant au moins la première clé de session symétrique, SSK1, et le nombre aléatoire, RND, le dispositif de sécurité électronique obtenant un premier résultat et le dispositif électronique non sécurisé obtenant un second résultat, dans lequel le dispositif électronique non sécurisé envoie le second résultat au dispositif de sécurité électronique, dans lequel le dispositif de sécurité électronique vérifie (525) si le second résultat reçu correspond au premier résultat, dans lequel l'authentification est achevée avec succès si les deux résultats correspondent, dans lequel, si les deux résultats ne correspondent pas, le processus d'authentification du dispositif électronique non sécurisé par le dispositif de sécurité électronique sera répété jusqu'à ce que les deux résultats correspondent ou qu'un nombre donné de nouvelles tentatives soit atteint, dans lequel si le nombre donné de nouvelles tentatives est atteint, le dispositif de sécurité électronique initie une étape de réparation avec le dispositif électronique non sécurisé ; et
dans lequel l'étape de réparation comprend l'étape consistant à vérifier, par le biais du dispositif de sécurité électronique, si les informations concernant le dispositif électronique non sécurisé sont contenues dans le certificat d'identification numérique, et si tel est le cas, le dispositif de sécurité électronique génère une nouvelle première clé de session symétrique, SSK1, et envoie la nouvelle première clé de session symétrique, SSK1, au dispositif électronique non sécurisé, dans lequel l'authentification du dispositif électronique non sécurisé est mise en oeuvre sur la base de la nouvelle première clé de session symétrique, SSK1 ;
- si l'authentification est achevée avec succès, exécuter (23) des opérations cryptographiques dans le dispositif de sécurité électronique, dans lequel le dispositif électronique non sécurisé demande, au moyen de messages envoyés au dispositif de sécurité électronique, que celui-ci mette en oeuvre les opérations cryptographiques afin de sécuriser des transactions électroniques, dans lequel ces opérations peuvent nécessiter l'utilisation de clés d'identification asymétriques et/ou de certificats racines numériques, dans lequel le dispositif électronique non sécurisé peut inclure des paramètres supplémentaires dans les messages de demande, et dans lequel le dispositif de sécurité électronique envoie le résultat de chaque opération demandée ou un code d'erreur au dispositif électronique non sécurisé.

13. Procédé selon la revendication 12, dans lequel, lors de l'exécution des opérations cryptographiques dans le dispositif de sécurité électronique, tous les messages de demande et de réponse échangés par le dispositif électronique non sécurisé et le dispositif de sécurité électronique sont accompagnés d'un code de vérification obtenu au moyen de l'application d'une deuxième fonction cryptographique unidirectionnelle à une combinaison de données qui inclut au moins la valeur de la première clé de session symétrique, SSK1, et le message à envoyer.

14. Procédé selon la revendication 12 ou 13, dans lequel l'étape d'appariement du dispositif de sécurité électronique avec le dispositif électronique non sécurisé consiste à générer, par le biais du dispositif de sécurité électronique, une seconde clé de session symétrique, SSK2, (312) et à l'envoyer au dispositif électronique non sécurisé, dans lequel, au cours du processus d'exécution des opérations cryptographiques dans le dispositif de sécurité électronique, tous les messages échangés par le dispositif de sécurité électronique et le dispositif électronique non sécurisé sont chiffrés avant d'être envoyés et sont déchiffrés après avoir été reçus, en utilisant pour ce faire la seconde clé de session symétrique, SSK2.

15. Procédé selon la revendication 12, 13 ou 14, dans lequel l'exécution des opérations cryptographiques dans le dispositif de sécurité électronique implique qu'après avoir dépassé un temps maximum depuis la dernière demande d'opération cryptographique reçue par le dispositif de sécurité électronique, en provenance du dispositif électronique non sécurisé, la prochaine demande d'opération cryptographique reçue par le dispositif de sécurité électronique, en provenance du dispositif électronique non sécurisé, aboutit à un retour au processus d'authentification du dispositif électronique non sécurisé par le dispositif de sécurité électronique, après quoi le dispositif de sécurité électronique et le dispositif électronique non sécurisé mettent à jour la valeur de la première clé de session symétrique, SSK1, en utilisant une troisième fonction cryptographique unidirectionnelle pour l'obtenir, laquelle est appliquée à au moins la valeur précédente de la première clé de session symétrique, SSK1, après quoi le dispositif de sécurité électronique et le dispositif électronique non sécurisé mettent à jour la valeur de la seconde clé de session symétrique, SSK2, s'il y en a une, en utilisant une quatrième fonction cryptographique unidirectionnelle pour l'obtenir, laquelle est appliquée à au moins la valeur précédente de la seconde clé de session symétrique, SSK2, après quoi les deux dispositifs reviennent au processus d'exécution d'opérations cryptographiques dans le dispositif de sécurité électronique.

16. Procédé selon la revendication 12, 13, 14 ou 15, dans lequel l'étape d'appariement du dispositif de sécurité électronique avec le dispositif électronique non sécurisé comprend en outre l'étape consistant à obtenir, par le biais du dispositif de sécurité électronique, en utilisant le certificat d'identification numérique et une démonstration qu'il possède les clés d'identification asymétriques, un certificat numérique d'administration à distance qui permet au dispositif de sécurité électronique d'établir des communications sécurisées avec un administrateur distant du dispositif de sécurité électronique ; et
dans lequel l'étape d'authentification du dispositif électronique non sécurisé par le dispositif de sécurité électronique, après avoir atteint un nombre donné de nouvelles tentatives, comprend l'étape consistant à se connecter, par le biais du dispositif de sécurité électronique, à l'administrateur distant, en utilisant au moins le certificat numérique d'administrateur distant et les clés d'identification asymétriques, dans lequel, si le dispositif de sécurité électronique reçoit un message d'autorisation en provenance de l'administrateur distant, le dispositif de sécurité électronique envoie la première clé de session symétrique, SSK1, et la seconde clé de session symétrique, SSK2, s'il y en a une, au dispositif électronique non sécurisé, et poursuit le processus d'authentification du dispositif électronique non sécurisé par le dispositif de sécurité électronique.
